# EUROPEAN PATENT SPECIFICATION

(11) **EP 4 455 641 B1**
(45) Date of publication and mention of the grant of the patent: **01.07.2026**
(21) Application number: 23853725.2
(22) Date of filing: 04.07.2023
(51) Int. Cl.: G01N 21/64, G02B 21/00

(54) **SYNTHETIC APERTURE-BASED TWO-PHOTON MICROSCOPIC IMAGING METHOD AND APPARATUS**
AUF SYNTHETISCHER APERTUR BASIERENDES ZWEI-PHOTONEN-MIKROSKOPIEBILDGEBUNGSVERFAHREN UND VORRICHTUNG
PROCÉDÉ ET APPAREIL D'IMAGERIE MICROSCOPIQUE À DEUX PHOTONS REPOSANT SUR UNE SYNTHÈSE D'OUVERTURE

(30) Priority: 07.03.2023 CN 202310238244
(43) Date of publication of application: 30.10.2024
(73) Proprietor: Tsinghua University, Haidian District Beijing 100084 (CN)
(72) Inventor: DAI, Qionghai, Beijing 100084 (CN); ZHAO, Zhifeng, Beijing 100084 (CN); WU, Jiamin, Beijing 100084 (CN)
(74) Representative: Ipsilon
(86) International application number: PCT/CN2023/105688
(87) International publication number: WO 2024/183198

(56) References cited:
- WO-A1-2015/124648
- WO-A1-2017/139885
- CN-A- 110 006 861
- CN-A- 110 954 523
- CN-A- 110 954 523
- CN-A- 113 049 587
- CN-A- 113 466 190
- CN-A- 116 337 832
- US-A1- 2014 008 549
- US-A1- 2016 320 602
- ZHAO ZHIFENG ET AL: "Two-photon synthetic aperture microscopy for minimally invasive fast 3D imaging of native subcellular behaviors in deep tissue", CELL, ELSEVIER, AMSTERDAM NL, vol. 186, no. 11, 12 May 2023 (2023-05-12), pages 2475, XP087323514, ISSN: 0092-8674, [retrieved on 20230512], DOI: 10.1016/J.CELL.2023.04.016
- YANG YANLONG ET AL: "Laser scanning stereomicroscopy for fast volumetric imaging with two-photon excitation and scanned Bessel beams", PROGRESS IN BIOMEDICAL OPTICS AND IMAGING, SPIE - INTERNATIONAL SOCIETY FOR OPTICAL ENGINEERING, BELLINGHAM, WA, US, vol. 9329, 3 March 2015 (2015-03-03), pages 93292W - 93292W, XP060049223, ISSN: 1605-7422, ISBN: 978-1-5106-0027-0, DOI: 10.1117/12.2079646
- JANIAK F. K. ET AL: "Non-telecentric two-photon microscopy for 3D random access mesoscale imaging", vol. 13, no. 1, 27 January 2022 (2022-01-27), XP055944549, Retrieved from the Internet <URL:https://www.nature.com/articles/s41467-022-28192-0.pdf> DOI: 10.1038/s41467-022-28192-0
- HILLMAN ELIZABETH MC ET AL: "High-speed 3D imaging of cellular activity in the brain using axially-extended beams and light sheets", CURRENT OPINION IN NEUROBIOLOGY, LONDON, GB, vol. 50, 9 April 2018 (2018-04-09), pages 190 - 200, XP085403549, ISSN: 0959-4388, DOI: 10.1016/J.CONB.2018.03.007
- SEAN QUIRIN ET AL: "Simultaneous imaging of neural activity in three dimensions", FRONTIERS IN NEURAL CIRCUITS, vol. 8, 3 April 2014 (2014-04-03), XP055605124, ISSN: 1662-5110, DOI: 10.3389/fncir.2014.00029
- XIANG, YIYI: "Research on Synthetic Aperture Imaging Method Based on Confocal Illumination", INFORMATION & TECHNOLOGY, CHINA MASTER'S THESES, 15 December 2020 (2020-12-15), XP093208333

## Description

### CROSS-REFERENCE TO RELATED APPLICATION

This application is based on and claims a priority to Chinese Patent Application No. 202310238244.2, filed on March 7, 2023.

### FIELD

The present disclosure relates to the technical field of microscopic imaging, and more particularly, to a 2-photon microscopy imaging method and apparatus based on a synthetic aperture.

### BACKGROUND

The 2-photon microscopy imaging technology can effectively suppress background fluorescence by virtue of a nonlinear effect of two-photon excitation. Since excitation wavelengths used by the 2-photon microscopy imaging technology are all in the infrared band, a 2-photon microscopy provides deep penetration when imaging scattering tissue samples.

In the related art, three-dimensional two-photon imaging can excite signals of a single body while scanning a surface by expanding a depth of field, such as using a Bessel light beam or using a V-shaped light beam, or can achieve almost simultaneous multiplanar imaging with the principle of multiplexing. CN113466190A relates to a multi-mode multi-photon laser scanning three-dimensional microscopic imaging device, which utilize a programmable control wavefront shaping device to generate excitation light fields with different focal depths, three imaging modes of spot scanning optical layer cutting imaging, line scanning optical projection imaging and double-visual-angle three-dimensional scanning real-time three-dimensional imaging are respectively realized.

However, in the related art, a body imaging speed of the 2-photon microscopy decreases due to a need to scan a three-dimensional sample layer by layer during imaging. In addition, a data throughput of an imaging system is limited, which leads to a decrease in a resolution of a final imaging result, failing to satisfy a demand for fast and efficient two-photon imaging and reducing a definition of the final imaging result. These problems need to be solved urgently.

### SUMMARY

The present disclosure provides a 2-photon microscopy imaging method and apparatus based on a synthetic aperture, to solve problems in the related art, for example, the reduced body imaging speed of the 2-photon microscopy due to the need to scan the three-dimensional sample layer by layer during imaging, the limited data throughput of the imaging system, which leads to a decrease in a resolution of a final imaging result, failing to satisfy a demand for fast and efficient two-photon imaging and reducing a definition of the final imaging result.

In a first aspect of the present disclosure, an embodiment provides a 2-photon microscopy imaging method based on a synthetic aperture. The method includes: collecting, based on a two-photon synthetic aperture microscope, three-dimensional sample projection information from different view angles by using excitation light beam of a spatial restraint small hole of the synthetic aperture; obtaining three-dimensional sample information based on the three-dimensional sample projection information; obtaining, based on three-dimensional sample information collected through excitation with the spatial restraint small hole, small aperture imaging results from the different view angles; and reconstructing, based on the small aperture imaging results from the different view angles, a three-dimensional body satisfying a predetermined resolution condition, wherein the three-dimensional body is updated when the three-dimensional sample information from one of the different view angles is updated. A size of the spatial restraint small hole corresponds to a diffraction limit size at a small aperture excitation.

Optionally, in an embodiment of the present disclosure, the method further includes, prior to the collecting the three-dimensional sample projection information from the different view angles: determining an actual demand for 2-photon microscopy imaging; and determining a scanning path and/or scanning mode for the spatial restraint small hole based on the actual demand for 2-photon microscopy imaging.

In a second aspect of the present disclosure, an embodiment provides a 2-photon microscopy imaging apparatus based on a synthetic aperture. The apparatus includes: a collection module configured to collect, based on a two-photon synthetic aperture microscope, three-dimensional sample projection information from different view angles by using excitation light beam of a spatial restraint small hole of the synthetic aperture; an obtaining module configured to obtain three-dimensional sample information based on the three-dimensional sample projection information; and an imaging module configured to reconstruct a two-photon synthetic aperture imaging result based on the three-dimensional sample information using a predetermined sliding window; an obtaining unit configured to obtain, based on three-dimensional sample information collected through excitation with the spatial restraint small hole, small aperture imaging results from the different view angles; and a reconstruction unit configured to reconstruct, based on the small aperture imaging results from the different view angles, a three-dimensional body satisfying a predetermined resolution condition, wherein the three-dimensional body is updated when the three-dimensional sample information from one of the different view angles is updated. A size of the spatial restraint small hole corresponds to a diffraction limit size at a small aperture excitation.

Optionally, in an embodiment of the present disclosure, the apparatus further includes: a first determination module configured to determine, prior to collecting the three-dimensional sample projection information from the different view angles, an actual demand for 2-photon microscopy imaging; and a second determination module configured to determine a scanning path and/or scanning mode for the spatial restraint small hole based on the actual demand for 2-photon microscopy imaging.

In a third aspect of the present disclosure, an embodiment provides an electronic device. The electronic device includes a memory, a processor, and a computer program stored in the memory and executable on the processor. The processor, when executing the computer program, implements the 2-photon microscopy imaging method based on the synthetic aperture according to the above embodiments.

In a fourth aspect of the present disclosure, an embodiment provides a computer-readable storage medium. The computer-readable storage medium stores a computer program. The computer program implements, when executed by a processor, the 2-photon microscopy imaging method based on the synthetic aperture according to the above embodiments.

According to the embodiments of the present disclosure, based on the excitation light beam of the spatial restraint small hole of the synthetic aperture, the two-photon synthetic aperture imaging result can be obtained by reconstructing the three-dimensional sample information using the predetermined sliding window, thereby improving the body imaging speed during the 2-photon microscopy imaging. Thus, a temporal resolution of three-dimensional imaging can be ensured, a spatial resolution of imaging can be enhanced and expanded excitation for an axial range of a sample can be achieved. Therefore, the two-photon imaging is endowed with a high data throughput meeting the requirement for fast and high-quality three-dimensional imaging.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a flowchart of a 2-photon microscopy imaging method based on a synthetic aperture according to an embodiment of the present disclosure.
FIG. 2 is a schematic diagram of a microscope containing a conventional two-photon optical path and a two-photon synthetic aperture optical path according to an embodiment of the present disclosure.
FIG. 3 is a schematic diagram illustrating a comparison between an imaging mode of a conventional 2-photon microscopy and an imaging mode of a two-photon synthetic aperture microscope according to an embodiment of the present disclosure.
FIG. 4 is a schematic diagram illustrating an example imaging result of a two-photon synthetic aperture microscope according to an embodiment of the present disclosure.
FIG. 5 is a structural schematic diagram of a 2-photon microscopy imaging apparatus based on a synthetic aperture according to an embodiment of the present disclosure.
FIG. 6 is a structural schematic diagram of an electronic device according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A 2-photon microscopy imaging method and apparatus based on a synthetic aperture according to the embodiments of the present disclosure are described below with reference to the accompanying drawings. As discussed in the section of background, in the related art, a three-dimensional sample is required to be scanned layer by layer during imaging, such that a body imaging speed of a 2-photon microscopy decreases, thereby limiting a data throughput of an imaging system and leading to a decrease in a resolution of a final imaging result, failing to satisfy a demand for fast and efficient two-photon imaging and reducing a definition of the final imaging result. In view of these problems, the present disclosure provides a 2-photon microscopy imaging method based on a synthetic aperture. With the method, based on the excitation light beam of a spatial restraint small hole of the synthetic aperture, a two-photon synthetic aperture imaging result is obtained by reconstructing three-dimensional sample information using a predetermined sliding window, thereby improving a body imaging speed during the 2-photon microscopy imaging. Thus, a temporal resolution of three-dimensional imaging can be ensured, a spatial resolution of imaging can be enhanced and expanded excitation for an axial range of a sample can be achieved. Therefore, the two-photon imaging is endowed with a high data throughput meeting the requirement for fast and high-quality three-dimensional imaging. As a result, problems in the related art, for example, the decreasing of the body imaging speed of the 2-photon microscopy due to the need to scan the three-dimensional sample layer by layer during the imaging, and failing to satisfy the demand for the fast and efficient two-photon imaging due to the reduced resolution of the final imaging result caused by the limited data throughput of the imaging system.

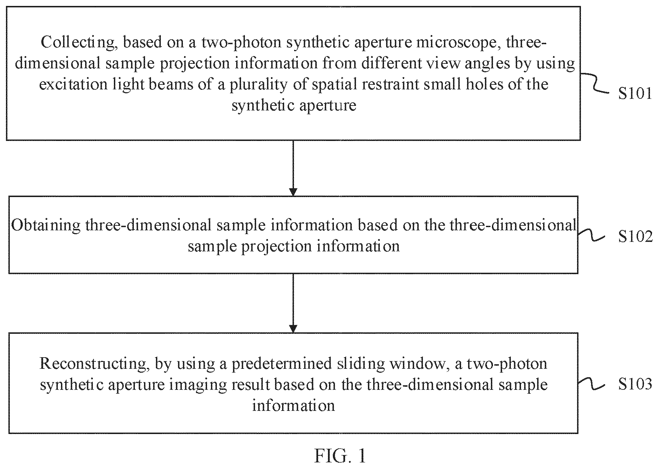

FIG. 1 is a flowchart of a 2-photon microscopy imaging method based on a synthetic aperture according to an embodiment of the present disclosure.

As illustrated in FIG. 1, the method for the 2-photon microscopy imaging based on the synthetic aperture includes the following action at blocks.

At block S101, based on a two-photon synthetic aperture microscope, three-dimensional sample projection information from different view angles is collected by using excitation light beam of a spatial restraint small hole of the synthetic aperture.

It should be understood that, according to the embodiments of the present disclosure, the two-photon synthetic aperture microscope may include a small aperture. The three-dimensional sample projection information from the different view angles can be obtained by exciting the light beams with the spatial restraint small hole of the small aperture. The synthetic aperture may constitute a total synthetic aperture from the small aperture through computational photographing.

According to the embodiments of the present disclosure, based on the two-photon synthetic aperture microscope, the three-dimensional sample projection information from the different view angles is collected by exciting the light beams with the spatial restraint small hole of the synthetic aperture, thereby enhancing a use efficiency of excitation photons during excitation of a sample and extending a depth of field range of the excitation.

In an embodiment of the present disclosure, a size of the spatial restraint small hole corresponds to a diffraction limit size at a small aperture excitation.

It should be understood that the spatial restraint small holes according to the embodiments of the present disclosure, as small apertures in the two-photon synthetic aperture microscope, can provide spatial restraints. In the two-photon synthetic aperture microscope, the size of the spatial restraint small hole can be approximately equal to the diffraction limit size at the small aperture excitation. A light spot excited by the spatial restraint small hole on an aperture plane can be expanded and broaden through a diffraction effect.

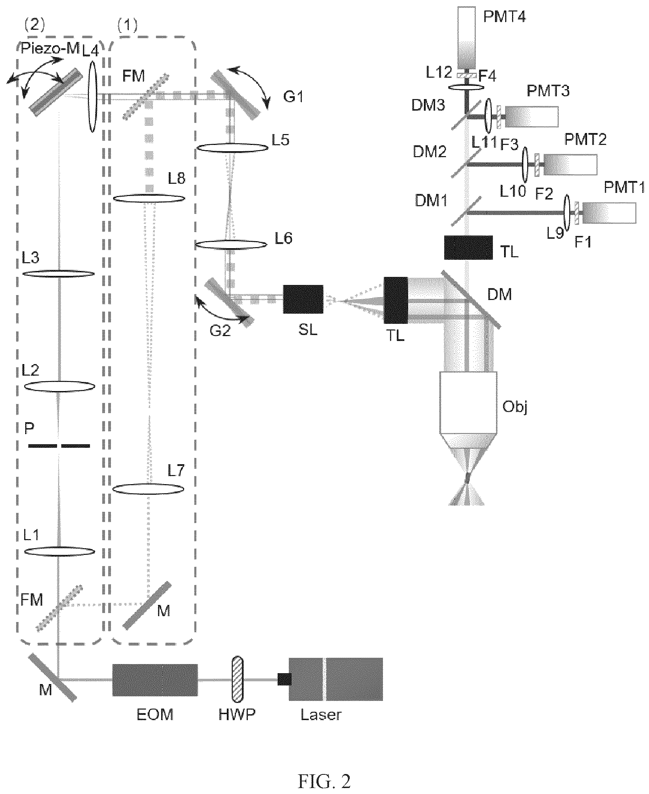

As an example, FIG. 2 is a schematic diagram of a microscope containing a conventional two-photon optical path and a two-photon synthetic aperture optical path according to an embodiment of the present disclosure. As illustrated in FIG. 2, a light source is a femtosecond pulsed laser (Laser). A Half-Wave Plate (HWP) and an Electro-Optic Modulator (EOM) can jointly modulate an energy level of excitation light. An electrically tunable mirror (FM) and a corresponding mirror (M) switch (1) a conventional two-photon optical path and (2) a two-photon synthetic aperture optical path. In the two-photon synthetic aperture optical path, excitation light transmits through a small hole (P) for providing a spatial restraint. Lenses (L1 to L8), a Scan Lens (SL), and a Tube Lens (TL) can change a size of a diameter of a light beam as it is incident on an aperture plane of an objective lens, to achieve full aperture excitation of a conventional 2-photon microscopy and small aperture excitation of the two-photon synthetic aperture microscope. A two-dimensional flip mirror (Piezo-M) can change an incident position of the small aperture in the aperture plane of the objective lens at a high speed. A resonant galvanometer G1 and a linear galvanometer G2 enable fast transverse plane scanning of an excitation focal plane. Four dichroic mirrors (DM) are configured to separate excitation light from collected fluorescence in four different channels. A detection end of the microscope is composed of four photomultiplier tubes (PMTPMT1 to PMTPMT 4), four filters (F1 to F4) suitable for different wave bands, and four collection lenses (L9 to L12).

According to the embodiments of the present disclosure, the size of the spatial restraint small hole corresponds to the diffraction limit size at the small aperture excitation. By limiting the size of the spatial restraint small hole, a high-frequency component can be increased during excitation of a three-dimensional sample, and an axial range of the excited sample can be expanded, thereby enhancing a data throughput of the 2-photon microscopy.

Optionally, in an embodiment of the present disclosure, the method further includes, prior to the collecting the three-dimensional sample projection information from the different view angles: determining an actual demand for 2-photon microscopy imaging; and determining, based on the actual demand for 2-photon microscopy imaging, a scanning path and/or scanning mode for the spatial restraint small hole.

It should be understood that, according to the embodiments of the present disclosure, the demand for 2-photon microscopy imaging may be determined based on the user's actual observational demand, and thus the scanning path and scanning mode for each spatial restraint small hole can be determined. Therefore, the imaging is performed based on the actual situation of the sample and the user's actual demand.

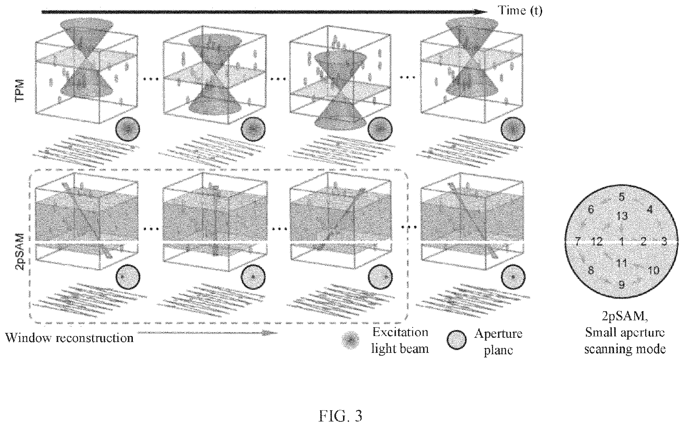

For example, FIG. 3 is a schematic diagram illustrating a comparison between an imaging mode of a conventional 2-photon microscopy and an imaging mode of a two-photon synthetic aperture microscope according to an embodiment of the present disclosure. In FIG. 3, a scanning path of the conventional 2-photon microscopy (TPM) is illustrated in the upper half, in which background fluorescence is suppressed in a point excitation mode; and a scanning mode and a scanning path of the Two-photon Synthetic Aperture Microscope (2pSAM) are illustrated in the lower half, in which scanning is performed in a pin excitation mode using thirteen small apertures from different view angles.

According to the embodiments of the present disclosure, the actual demand for 2-photon microscopy imaging can be determined, and the scanning path and/or scanning mode for the spatial restraint small hole is determined based on the actual demand for 2-photon microscopy imaging, thereby guaranteeing a high-speed body imaging speed for the microscopic imaging and improving a transverse resolution and axial resolution of the three-dimensional sample.

At block S102, three-dimensional sample information is obtained based on the three-dimensional sample projection information.

It should be understood that, in the embodiments of the present disclosure, the three-dimensional sample projection information may refer to projections of the three-dimensional sample from multiple different view angles that are obtained by the small aperture of the two-photon synthetic aperture microscope in the previous step; and the three-dimensional sample information may refer to all fluorescence signals in a body of the three-dimensional sample that are obtained by the two-photon synthetic aperture microscope, i.e., small aperture imaging results from all view angles.

According to the embodiments of the present disclosure, the three-dimensional sample information can be obtained based on the three-dimensional sample projection information, thereby further realizing the imaging of the three-dimensional sample based on the obtained sample imaging information. Therefore, a speed and a capability of collecting three-dimensional information during the microscopic imaging can be enhanced.

At block S103, by using a predetermined sliding window, a two-photon synthetic aperture imaging result is reconstructed based on the three-dimensional sample information.

It should be understood that, according to the embodiments of the present disclosure, the two-photon synthetic aperture imaging result can be reconstructed using the predetermined sliding window. All the three-dimensional information of the sample can be obtained by the two-photon synthetic aperture microscope with a three-dimensional reconstruction algorithm to achieve sample imaging.

It should be noted that, the predetermined sliding window is set by those skilled in the art as desired, and is not specifically limited herein.

In some embodiments, the three-dimensional reconstruction algorithm of the two-photon synthetic aperture microscope can reconstruct the transverse resolution and the axial resolution of the three-dimensional sample. For example, a phase reconstruction algorithm based on iterative reconstruction such as RL can be used to reconstruct and obtain the two-photon synthetic aperture imaging result, or an artificial intelligence network reconstruction algorithm based on deep learning can be used.

According to the embodiments of the present disclosure, the two-photon synthetic aperture imaging result can be reconstructed based on the three-dimensional sample information using the predetermined sliding window, such that the spatial resolution and the temporal resolution of the two-photon synthetic aperture microscope can be guaranteed and a corresponding data throughput can be enhanced, thereby rapidly obtaining a high-quality imaging data result.

Said reconstructing, by using the predetermined sliding window, the two-photon synthetic aperture imaging result based on the three-dimensional sample information includes: obtaining, based on three-dimensional sample information collected through excitation with each spatial restraint small hole, small aperture imaging results from the different view angles; and reconstructing, based on the small aperture imaging results from the different view angles, a three-dimensional body satisfying a predetermined resolution condition. The three-dimensional body is updated when the three-dimensional sample information from one of the different view angles is updated.

It should be understood that, according the embodiments of the present disclosure, the data collected through excitation with each small aperture in the two-photon synthetic aperture microscope contains information of the entire three-dimensional sample. The information of the entire three-dimensional sample corresponds to the imaging results from different view angles, respectively. The reconstruction of the small aperture imaging results from the different view angles into the three-dimensional body satisfying the resolution condition can be implemented with the three-dimensional reconstruction algorithm. After three-dimensional information from a view angle is updated through three-dimensional reconstruction of the sliding window, the three-dimensional reconstruction result can be updated by the two-photon synthetic aperture microscope based on the three-dimensional information.

It should be noted that, the predetermined resolution condition is set by those skilled in the art as desired, and is not specifically limited herein.

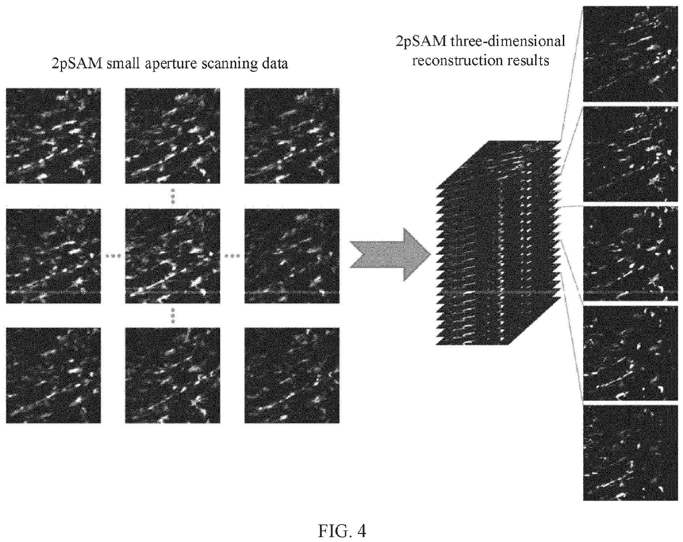

As an example, FIG. 4 is a schematic diagram illustrating an example imaging result of a two-photon synthetic aperture microscope according to an embodiment of the present disclosure. As illustrated in FIG. 4, cells expressing GFP fluorescence in the brain of a CX3CR1 mouse are imaged using the two-photon synthetic aperture microscope. Different small aperture imaging results are shown at the left part; and a three-dimensional reconstruction result with a high spatial resolution shown at the right part of the figure is obtained by three-dimensional reconstruction, with an image quality similar to a result of body scanning of a conventional large-aperture 2-photon microscopy.

According to the embodiments of the present disclosure, the small aperture imaging results from the different view angles can be obtained based on the three-dimensional sample information collected through the excitation with the spatial restraint small hole, and the three-dimensional body satisfying the predetermined resolution condition can be reconstructed, thereby effectively increasing the temporal resolution of the two-photon synthetic aperture microscope, and further improving the data throughput of the 2-photon microscopy. An imaging efficiency and an imaging quality can be both ensured.

With the 2-photon microscopy imaging method based on the synthetic aperture according to the embodiments of the present disclosure, based on the excitation light beam of the spatial restraint small hole of the synthetic aperture, the two-photon synthetic aperture imaging result can be obtained by reconstructing the three-dimensional sample information using the predetermined sliding window, thereby improving the body imaging speed during the 2-photon microscopy imaging. Thus, a temporal resolution of three-dimensional imaging can be ensured, a spatial resolution of imaging can be enhanced and expanded excitation for an axial range of a sample can be achieved. Therefore, the two-photon imaging is endowed with a high data throughput meeting the requirement for fast and high-quality three-dimensional imaging.

A 2-photon microscopy imaging apparatus based on a synthetic aperture according to the embodiments of the present disclosure is described below with reference to the accompanying drawings.

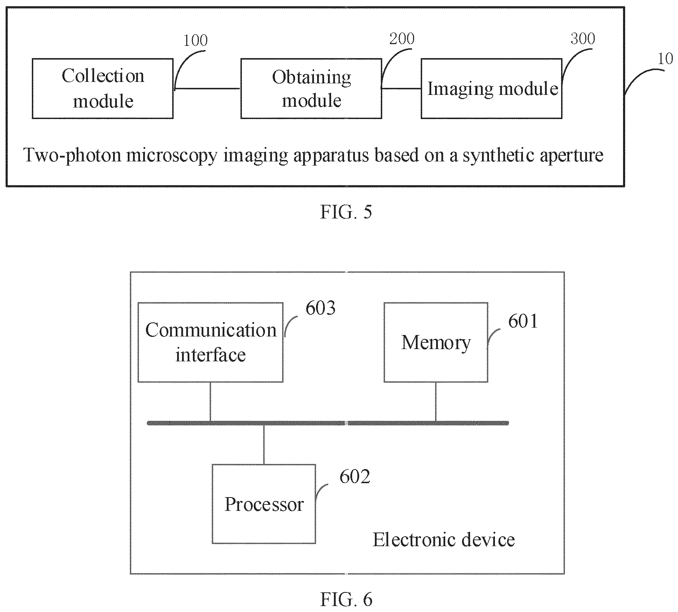

FIG. 5 is a structural schematic diagram of a 2-photon microscopy imaging apparatus based on a synthetic aperture according to an embodiment of the present disclosure.

As illustrated in FIG. 5, a 2-photon microscopy imaging apparatus 10 based on a synthetic aperture includes a collection module 100, an obtaining module 200, and an imaging module 300.

The collection module 100 is configured to collect, based on a two-photon synthetic aperture microscope, three-dimensional sample projection information from different view angles by using excitation light beam of a spatial restraint small hole of the synthetic aperture.

The obtaining module 200 is configured to obtain three-dimensional sample information based on the three-dimensional sample projection information.

The imaging module 300 is configured to reconstruct, by using a predetermined sliding window, a two-photon synthetic aperture imaging result based on the three-dimensional sample information.

In an embodiment of the present disclosure, a size of the spatial restraint small hole corresponds to a diffraction limit size at a small aperture excitation.

The imaging module 300 includes an obtaining unit and a reconstruction unit.

The obtaining unit is configured to obtain small aperture imaging results from the different view angles based on three-dimensional sample information collected through excitation with the spatial restraint small hole.

The reconstruction unit is configured to reconstruct, based on the small aperture imaging results from the different view angles, a three-dimensional body satisfying a predetermined resolution condition. The three-dimensional body is updated when the three-dimensional sample information from one of the different view angles is updated.

Optionally, in an embodiment of the present disclosure, the apparatus 10 further includes a first determination module and a second determination module.

The first determination module is configured to determine, prior to collecting the three-dimensional sample projection information from the different view angles, an actual demand for 2-photon microscopy imaging.

The second determination module is configured to determine a scanning path and/or scanning mode for the spatial restraint small hole based on the actual demand for 2-photon microscopy imaging.

It should be noted that the above explanation and description on the embodiments of the 2-photon microscopy imaging method based on the synthetic aperture are also applicable to the 2-photon microscopy imaging apparatus based on the synthetic aperture according to this embodiment, and thus details thereof will be omitted herein.

With the 2-photon microscopy imaging apparatus based on the synthetic aperture according to the embodiments of the present disclosure, based on the excitation light beam of the spatial restraint small hole of the synthetic aperture, the two-photon synthetic aperture imaging result can be obtained by reconstructing the three-dimensional sample information using the predetermined sliding window, thereby improving the body imaging speed during the 2-photon microscopy imaging. Thus, a temporal resolution of three-dimensional imaging can be ensured, a spatial resolution of imaging can be enhanced and expanded excitation for an axial range of a sample can be achieved. Therefore, the two-photon imaging is endowed with a high data throughput meeting the requirement for fast and high-quality three-dimensional imaging.

FIG. 6 is a structural schematic diagram of an electronic device according to an embodiment of the present disclosure. The electronic device may include a memory 601, a processor 602, and a computer program stored in the memory 601 and executable on the processor 602. The processor 602, when executing the computer program, implements the 2-photon microscopy imaging method based on the synthetic aperture according to any of the above embodiments.

Further, the electronic device includes a communication interface 603 configured to communicate between the memory 601 and the processor 602. The memory 601 can store a computer program executable on the processor 602. The memory 601 may include a high-speed Random Access Memory (RAM), and a non-volatile memory, for example, at least one disk memory.

When the memory 601, the processor 602, and the communication interface 603 are implemented independently, the communication interface 603, the memory 601, and the processor 602 can be interconnected and communicate with each other via a bus. The bus can be an Industry Standard Architecture (ISA) bus, a Peripheral Component (PCI) bus, or an Extended Industry Standard Architecture (EISA) bus. The buses can be divided into an address bus, a data bus, a control bus, etc. For the convenience of description, only one thick line is used in FIG. 6, but it does not mean that there is only one bus or one type of bus.

Optionally, in a specific implementation, when the memory 601, the processor 602, and the communication interface 603 are integrated on a single chip for an implementation, the memory 601, the processor 602, and the communication interface 603 may communicate with each other through an internal interface.

The processor 602 can be a Central Processing Unit (CPU), or an Application Specific Integrated Circuit (ASIC), or one or more integrated circuits configured to implement an embodiment of the present disclosure.

A computer-readable storage medium is further provided according to an embodiment. The computer-readable storage medium stores a computer program. The computer program, when executed by a processor, implements the method for calculating the carbon emission flow oriented to the regional integrated energy system as described above.

In the specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics can be combined in any one or more embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "N" means at least two, such as two, three, etc., unless otherwise specifically defined.

Any process or method described in a flowchart or described herein in other ways can be understood to include one or N modules, segments, or portions of codes of executable instructions for achieving specific logical functions or steps in the process. The scope of a preferred embodiment of the present disclosure includes other implementations. A function can be performed not in a sequence shown or discussed, including a substantially simultaneous manner or a reverse sequence based on the function involved, which should be understood by those skilled in the art to which the embodiments of the present disclosure belong.

The logics and/or steps represented in the flowchart or described otherwise herein can be for example considered as a list of ordered executable instructions for implementing logic functions, and can be embodied in any computer-readable medium that is to be used by or used with an instruction execution system, apparatus, or device (such as a computer-based system, a system including a processor, or any other system that can retrieve and execute instructions from an instruction execution system, apparatus, or device). For the present disclosure, a "computer-readable medium" can be any apparatus that can contain, store, communicate, propagate, or transmit a program to be used by or used with an instruction execution system, apparatus, or device. More specific examples of computer-readable mediums include, as a non-exhaustive list: an electrical connector (electronic device) with one or N wirings, a portable computer disk case (magnetic devices), a Random Access Memory (RAM), a Read Only Memory (ROM), an Erasable Programmable Read Only Memory (EPROM or flash memory), a fiber optic device, and a portable Compact Disk Read Only memory (CDROM). In addition, the computer-readable medium may even be paper or other suitable medium on which the program can be printed, as the program can be obtained electronically, e.g., by optically scanning the paper or the other medium, and then editing, interpreting, or otherwise processing the scanning result when necessary, and then stored in a computer memory.

It should be understood that each part of the present disclosure can be realized by hardware, software, firmware, or a combination thereof. In the above embodiments, N steps or methods can be realized by software or firmware stored in the memory and executed by an appropriate instruction execution system. For example, when it is realized by the hardware, likewise in another embodiment, the steps or methods can be realized by one or a combination of the following techniques known in the art: a discreet logic circuit having a logic gate circuit for realizing a logic function of a data signal, an application-specific integrated circuit having an appropriate combination logic gate circuit, a Programmable Gate Array (PGA), a Field Programmable Gate Array (FPGA), etc.

It should be understood by those skilled in the art that all or a part of the steps carried by the method in the above-described embodiments can be completed by relevant hardware instructed by a program. The program can be stored in a computer-readable storage medium. When the program is executed, one or a combination of the steps of the method in the above-described embodiments can be included.

In addition, the functional units in various embodiments of the present disclosure can be integrated into one processing module, or each unit can be standalone physically, or two or more units can be integrated into one module. The above integrated module can be implemented in a form of hardware or in a form of a software functional module. When implemented in the form of the software function module and sold or used as an independent product, the integrated module can also be stored in a computer-readable storage medium.

The above-mentioned storage medium can be a read only memory, a magnetic disk, or an optical disc, etc. Although the embodiments of the present disclosure have been illustrated and described above, it can be appreciated that the above embodiments are exemplary only, and should not be construed as limiting the present disclosure. Various changes, modifications, replacements and variants can be made to the above embodiments by those skilled in the art without departing from the scope of the present disclosure.

## Claims

1. A 2-photon microscopy imaging method based on a synthetic aperture, comprising:
collecting (S101), based on a two-photon synthetic aperture microscope, three-dimensional sample projection information from different view angles by using excitation light beam of a spatial restraint small hole of the synthetic aperture;
obtaining (S102) three-dimensional sample information based on the three-dimensional sample projection information;
obtaining, based on three-dimensional sample information collected through excitation with the spatial restraint small hole, small aperture imaging results from the different view angles; and
reconstructing, based on the small aperture imaging results from the different view angles, a three-dimensional body satisfying a predetermined resolution condition, wherein the three-dimensional body is updated when the three-dimensional sample information from one of the different view angles is updated,
wherein a size of the spatial restraint small hole corresponds to a diffraction limit size at a small aperture excitation.

2. The method according to claim 1, further comprising, prior to said collecting the three-dimensional sample projection information from the different view angles:
determining an actual demand for 2-photon microscopy imaging; and
determining, based on the actual demand for 2-photon microscopy imaging, a scanning path and/or scanning mode for the spatial restraint small hole.

3. A 2-photon microscopy imaging apparatus (10) based on a synthetic aperture, comprising:
a collection module (100) configured to collect, based on a two-photon synthetic aperture microscope, three-dimensional sample projection information from different view angles by using excitation light beam of a spatial restraint small hole of the synthetic aperture;
an obtaining module (200) configured to obtain three-dimensional sample information based on the three-dimensional sample projection information;
an obtaining unit configured to obtain, based on three-dimensional sample information collected through excitation with the spatial restraint small hole, small aperture imaging results from the different view angles; and
a reconstruction unit configured to reconstruct, based on the small aperture imaging results from the different view angles, a three-dimensional body satisfying a predetermined resolution condition, wherein the three-dimensional body is updated when the three-dimensional sample information from one of the different view angles is updated,
wherein a size of the spatial restraint small hole corresponds to a diffraction limit size at a small aperture excitation.

4. The apparatus according to claim 3, further comprising:
a first determination module configured to determine, prior to collecting the three-dimensional sample projection information from the different view angles, an actual demand for 2-photon microscopy imaging; and
a second determination module configured to determine, based on the actual demand for 2-photon microscopy imaging, a scanning path and/or scanning mode for the spatial restraint small hole.

5. An electronic device for an apparatus according to claim 3 or 4, comprising:
a memory (601);
a processor (602); and
a computer program stored in the memory (601) and executable on the processor (602),
wherein the processor (602), when executing the computer program, implements the 2-photon microscopy imaging method based on the synthetic aperture according to claim 1 or 2.

6. A computer-readable storage medium, having a computer program stored thereon, wherein the computer program is configured to implement, when executed by a processor (602) of an electronic device of claim 5,
the 2-photon microscopy imaging method based on the synthetic aperture according to claim 1 or 2.

## Patentansprüche

1. 2-Photonen-Mikroskopie-Bildgebungsverfahren basierend auf einer synthetischen Apertur, umfassend:
Erfassen (S101), basierend auf einem Zwei-Photonen-Mikroskop mit synthetischer Apertur, von dreidimensionalen Probenprojektionsinformationen aus unterschiedlichen Betrachtungswinkeln unter Verwendung eines Anregungslichtstrahls einer räumlich beschränkten kleinen Öffnung der synthetischen Apertur;
Erhalten (S102) von dreidimensionalen Probeninformationen basierend auf den dreidimensionalen Probenprojektionsinformationen;
Erhalten, basierend auf dreidimensionalen Probeninformationen, die durch Anregung mit der räumlich beschränkten kleinen Öffnung erfasst werden, von Kleinapertur-Bildgebungsergebnissen aus den unterschiedlichen Betrachtungswinkeln; und
Rekonstruieren, basierend auf den Kleinapertur-Bildgebungsergebnissen aus den unterschiedlichen Betrachtungswinkeln, eines dreidimensionalen Volumenkörpers, der eine vorbestimmte Auflösungsbedingung erfüllt, wobei der dreidimensionale Volumenkörper aktualisiert wird, wenn die dreidimensionalen Probeninformationen aus einem der unterschiedlichen Betrachtungswinkel aktualisiert werden,
wobei eine Größe der räumlich beschränkten kleinen Öffnung einer Beugungsgrenzgröße bei einer Anregung mit kleiner Apertur entspricht.

2. Verfahren nach Anspruch 1, ferner umfassend, vor dem Erfassen der dreidimensionalen Probenprojektionsinformationen aus den unterschiedlichen Betrachtungswinkeln:
Bestimmen eines tatsächlichen Bedarfs für die 2-Photonen-Mikroskopie-Bildgebung; und
Bestimmen, basierend auf dem tatsächlichen Bedarf für die 2-Photonen-Mikroskopie-Bildgebung, eines Abtastpfads und/oder eines Abtastmodus für die räumlich beschränkte kleine Öffnung.

3. 2-Photonen-Mikroskopie-Bildgebungsvorrichtung (10) basierend auf einer synthetischen Apertur, umfassend:
ein Erfassungsmodul (100), das dazu eingerichtet ist, basierend auf einem Zwei-Photonen-Mikroskop mit synthetischer Apertur dreidimensionale Probenprojektionsinformationen aus unterschiedlichen Betrachtungswinkeln unter Verwendung eines Anregungslichtstrahls einer räumlich beschränkten kleinen Öffnung der synthetischen Apertur zu erfassen;
ein Erhaltungsmodul (200), das dazu eingerichtet ist, dreidimensionale Probeninformationen basierend auf den dreidimensionalen Probenprojektionsinformationen zu erhalten;
eine Erhaltungseinheit, die dazu eingerichtet ist, basierend auf dreidimensionalen Probeninformationen, die durch Anregung mit der räumlich beschränkten kleinen Öffnung erfasst werden, Bildgebungsergebnisse mit kleiner Apertur aus den unterschiedlichen Betrachtungswinkeln zu erhalten; und
eine Rekonstruktionseinheit, die dazu eingerichtet ist, basierend auf den Kleinapertur-Bildgebungsergebnissen aus den unterschiedlichen Betrachtungswinkeln einen dreidimensionalen Volumenkörper zu rekonstruieren, der eine vorbestimmte Auflösungsbedingung erfüllt, wobei der dreidimensionale Volumenkörper aktualisiert wird, wenn die dreidimensionalen Probeninformationen aus einem der unterschiedlichen Betrachtungswinkel aktualisiert werden,
wobei eine Größe der räumlich beschränkten kleinen Öffnung einer Beugungsgrenzgröße bei einer Anregung mit kleiner Apertur entspricht.

4. Vorrichtung nach Anspruch 3, ferner umfassend:
ein erstes Bestimmungsmodul, das dazu eingerichtet ist, vor dem Erfassen der dreidimensionalen Probenprojektionsinformationen aus den unterschiedlichen Betrachtungswinkeln einen tatsächlichen Bedarf für die 2-Photonen-Mikroskopie-Bildgebung zu bestimmen; und
ein zweites Bestimmungsmodul, das dazu eingerichtet ist, basierend auf dem tatsächlichen Bedarf für die 2-Photonen-Mikroskopie-Bildgebung einen Abtastpfad und/oder einen Abtastmodus für die räumlich beschränkte kleine Öffnung zu bestimmen.

5. Elektronisches Gerät für eine Vorrichtung nach Anspruch 3 oder 4, umfassend:
einen Speicher (601);
einen Prozessor (602); und
ein Computerprogramm, das in dem Speicher (601) gespeichert und auf dem Prozessor (602) ausführbar ist, wobei der Prozessor (602), wenn er das Computerprogramm ausführt, das 2-Photonen-Mikroskopie-Bildgebungsverfahren basierend auf der synthetischen Apertur nach Anspruch 1 oder 2 implementiert.

6. Computerlesbares Speichermedium, auf dem ein Computerprogramm gespeichert ist, wobei das Computerprogramm dazu eingerichtet ist, wenn es durch einen Prozessor (602) eines elektronischen Geräts Anspruch 5 ausgeführt wird, das 2-Photonen-Mikroskopie-Bildgebungsverfahren basierend auf der synthetischen Apertur nach Anspruch 1 oder 2 zu implementieren.

## Revendications

1. Procédé d'imagerie par microscopie à 2 photons basé sur une ouverture synthétique, comprenant :
la collecte (S101), sur la base d'un microscope à ouverture synthétique à deux photons, d'informations de projection d'échantillon tridimensionnel sous différents angles de vue en utilisant un faisceau de lumière d'excitation d'un petit trou de restriction spatiale de l'ouverture synthétique ;
l'obtention (S102) d'informations d'échantillon tridimensionnel sur la base des informations de projection d'échantillon tridimensionnel ;
l'obtention, sur la base des informations d'échantillon tridimensionnel collectées par excitation avec le petit trou de restriction spatiale, de résultats d'imagerie à petite ouverture sous les différents angles de vue ; et
la reconstruction, sur la base des résultats d'imagerie à petite ouverture sous les différents angles de vue, d'un corps tridimensionnel satisfaisant à une condition de résolution prédéterminée, dans lequel le corps tridimensionnel est mis à jour lorsque les informations d'échantillon tridimensionnel provenant de l'un des différents angles de vue sont mises à jour,
dans lequel une taille du petit trou de restriction spatiale correspond à une taille limite de diffraction lors d'une excitation à petite ouverture.

2. Procédé selon la revendication 1, comprenant en outre, avant ladite collecte des informations de projection d'échantillon tridimensionnel sous les différents angles de vue :
la détermination d'une demande réelle pour l'imagerie par microscopie à 2 photons ; et
la détermination, sur la base de la demande réelle pour l'imagerie par microscopie à 2 photons, d'une trajectoire de balayage et/ou d'un mode de balayage pour le petit trou de restriction spatiale.

3. Appareil d'imagerie par microscopie à 2 photons (10) basé sur une ouverture synthétique, comprenant :
un module de collecte (100) configuré pour collecter, sur la base d'un microscope à ouverture synthétique à deux photons, des informations de projection d'échantillon tridimensionnel sous différents angles de vue en utilisant un faisceau de lumière d'excitation d'un petit trou de restriction spatiale de l'ouverture synthétique ;
un module d'obtention (200) configuré pour obtenir des informations d'échantillon tridimensionnel sur la base des informations de projection d'échantillon tridimensionnel ;
une unité d'obtention configurée pour obtenir, sur la base des informations d'échantillon tridimensionnel collectées par excitation avec le petit trou de restriction spatiale, des résultats d'imagerie à petite ouverture sous les différents angles de vue ; et
une unité de reconstruction configurée pour reconstruire, sur la base des résultats d'imagerie à petite ouverture sous les différents angles de vue, un corps tridimensionnel satisfaisant à une condition de résolution prédéterminée, dans lequel le corps tridimensionnel est mis à jour lorsque les informations d'échantillon tridimensionnel provenant de l'un des différents angles de vue sont mises à jour,
dans lequel une taille du petit trou de restriction spatiale correspond à une taille limite de diffraction lors d'une excitation à petite ouverture.

4. Appareil selon la revendication 3, comprenant en outre :
un premier module de détermination configuré pour déterminer, avant la collecte des informations de projection d'échantillon tridimensionnel sous les différents angles de vue, une demande réelle pour l'imagerie par microscopie à 2 photons ; et
un second module de détermination configuré pour déterminer, sur la base de la demande réelle pour l'imagerie par microscopie à 2 photons, une trajectoire de balayage et/ou un mode de balayage pour le petit trou de restriction spatiale.

5. Dispositif électronique pour un appareil selon la revendication 3 ou 4, comprenant :
une mémoire (601) ;
un processeur (602) ; et
un programme informatique stocké dans la mémoire (601) et exécutable sur le processeur (602),
dans lequel le processeur (602), lors de l'exécution du programme informatique, met en œuvre le procédé d'imagerie par microscopie à 2 photons basé sur l'ouverture synthétique selon la revendication 1 ou 2.

6. Support de stockage lisible par ordinateur, sur lequel est stocké un programme informatique, dans lequel le programme informatique est configuré pour mettre en œuvre, lorsqu'il est exécuté par un processeur (602) d'un dispositif électronique selon la revendication 5, le procédé d'imagerie par microscopie à 2 photons basé sur l'ouverture synthétique selon la revendication 1 ou 2.
